(19) **Europäisches Patentamt / European Patent Office / Office européen des brevets**

(11) **EP 4 469 325 B1**

(12) **FASCICULE DE BREVET EUROPEEN**

(45) Date de publication et mention de la délivrance du brevet:
**28.01.2026 Bulletin 2026/05**

(21) Numéro de dépôt: **22846917.7**

(22) Date de dépôt: **15.12.2022**

(51) Classification Internationale des Brevets (IPC):
**B60W 30/18** (2012.01) **B60W 60/00** (2020.01)

(52) Classification Coopérative des Brevets (CPC):
**B60W 30/18154; B60W 60/0027; B60W 60/00274; B60W 60/00276;** B60W 2554/4029; B60W 2554/4041; B60W 2554/4042; B60W 2554/805; B60W 2556/20; B60W 2556/40

(86) Numéro de dépôt international:
**PCT/FR2022/052373**

(87) Numéro de publication internationale:
**WO 2023/144470 (03.08.2023 Gazette 2023/31)**

(54) **PROCÉDÉ ET DISPOSITIF DE CONTRÔLE DE TRAJECTOIRE D'UN VÉHICULE AUTONOME CIRCULANT DANS UN ENVIRONNEMENT COMPRENANT AU MOINS UN OBJET MOBILE**

VERFAHREN UND VORRICHTUNG ZUR STEUERUNG DER TRAJEKTORIE EINES AUTONOMEN FAHRZEUGS, DAS IN EINER UMGEBUNG MIT MINDESTENS EINEM BEWEGLICHEN OBJEKT FÄHRT

METHOD AND DEVICE FOR CONTROLLING THE TRAJECTORY OF AN AUTONOMOUS VEHICLE TRAVELLING IN AN ENVIRONMENT COMPRISING AT LEAST ONE MOVING OBJECT

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **28.01.2022 FR 2200778**

(43) Date de publication de la demande:
**04.12.2024 Bulletin 2024/49**

(73) Titulaires:
- **Stellantis Auto SAS**
  **78300 Poissy (FR)**
- **Centre National de la Recherche Scientifique**
  **75016 Paris Cedex 16 (FR)**
- **Université de Technologie de Compiègne**
  **60200 Compiègne (FR)**

(72) Inventeurs:
- **DUHAUTBOUT, Thibaud**
  **60280 MARGNY LES COMPIEGNE (FR)**
- **GUILLEMARD, Franck**
  **94370 SUCY EN BRIE (FR)**
- **AIOUN, Francois**
  **91320 WISSOUS (FR)**
- **TALJ, Reine**
  **60280 Clairoix (FR)**
- **CHERFAOUI, Véronique**
  **60000 Beauvais (FR)**

(74) Mandataire: **ESIP**
**Stellantis Auto SAS**
**Service REIP - YT800**
**43, rue Jean Pierre Timbaud**
**78300 Poissy (FR)**

(56) Documents cités:
**US-B1- 11 195 418**

- **LIXING HUANG ET AL: "Automated turning and merging for autonomous vehicles using a Nonlinear Model Predictive Control approach", 2017 AMERICAN CONTROL CONFERENCE (ACC), AACC, 24 May 2017 (2017-05-24), pages 5525 - 5531, XP033110800, DOI: 10.23919/ ACC.2017.7963814**

- SIDDHARTH H NAIR ET AL: "Stochastic MPC with Multi-modal Predictions for Traffic Intersections", ARXIV.ORG, CORNELL UNIVERSITY LIBRARY, 201 OLIN LIBRARY CORNELL UNIVERSITY ITHACA, NY 14853, 20 September 2021 (2021-09-20), XP091056978

- BORIS IVANOVIC ET AL: "Propagating State Uncertainty Through Trajectory Forecasting", ARXIV.ORG, CORNELL UNIVERSITY LIBRARY, 201 OLIN LIBRARY CORNELL UNIVERSITY ITHACA, NY 14853, 7 October 2021 (2021-10-07), XP091073342

## Description

Domaine technique

L'invention concerne les procédés et dispositifs de contrôle de trajectoire d'un véhicule autonome. L'invention concerne également un procédé et un dispositif de détermination d'une trajectoire de véhicule, notamment un véhicule autonome. L'invention concerne également un procédé et un dispositif de planification de la trajectoire d'un véhicule, notamment un véhicule autonome.

## Arrière-plan technologique

Avec le développement des véhicules autonomes, des besoins en termes de planification de la trajectoire à suivre, notamment en fonction de la géométrie de la route et/ou de l'environnement autour du véhicule autonome, sont apparus.

Le contrôle de la trajectoire d'un véhicule autonome, par le biais d'un ou plusieurs systèmes d'aide à la conduite, dit système(s) ADAS (de l'anglais « Advanced Driver-Assistance System » ou en français « Système d'aide à la conduite avancé ») embarqués dans le véhicule autonome, requiert une bonne connaissance de l'environnement autour du véhicule autonome, notamment des trajectoires des objets mobiles (par exemple un autre véhicule, un vélo ou un piéton) présents dans l'environnement du véhicule autonome, pour éviter toute collision.

Prédire la trajectoire d'un objet mobile ou dynamique se déplaçant dans le même environnement routier que celui du véhicule autonome est donc de première importance.

Des méthodes ont été présentées dans la littérature scientifique pour réaliser la prédiction des véhicules environnants.

Certaines méthodes (par exemple R. Schubert, E. Richter and G. Wanielik, "Comparison and evaluation of advanced motion models for vehicle tracking," 2008 11th International Conference on Information Fusion, 2008, pp. 1-6) se basent sur des modèles d'évolution pour suivre et estimer le déplacement futur d'un véhicule à partir d'observations et d'estimations de certains de ses états. Par exemple, des modèles à vitesse constante, à accélération constante, ou à vitesse de rotation constante peuvent être déterminés. Une fois les paramètres estimés, le modèle de véhicule est simulé pour calculer la trajectoire prédite.

D'autres méthodes (par exemple A. Houenou, P. Bonnifait, V. Cherfaoui and W. Yao, "Vehicle trajectory prediction based on motion model and maneuver recognition" 2013 IEEE/RSJ International Conference on Intelligent Robots and Systems, 2013, pp. 4363-4369, doi: 10.1109/IROS.2013.6696982) cherchent à déduire la manœuvre effectuée par le véhicule suivi, en classant le comportement parmi un ensemble réduit de manœuvres possibles : « rester sur la voie », « changer de voie » ou « tourner à l'intersection ». La manœuvre est classifiée à partir du chemin réalisé par le véhicule suivi, qui est comparé avec les voies pour identifier la voie la plus proche. La trajectoire est alors prédite par combinaison entre le résultat d'une prédiction basée sur un modèle et la manœuvre déterminée.

D'autres approches plus récentes exploitent des méthodes d'apprentissage, qui consistent à apprendre un réseau de neurones artificiel à partir de données réelles ou simulées. Dans l'article de C. Hegde, S. Dash and P. Agarwal, "Vehicle Trajectory Prediction using GAN," 2020 Fourth International Conference on I-SMAC (IoT in Social, Mobile, Analytics and Cloud) (I-SMAC), 2020, pp. 502-507, doi: 10.1109/I-SMAC49090.2020.9243464, un GAN (de l'anglais « Generative Adversarial Network » ou en français « Réseau antagoniste génératif ») est entraîné à partir de vidéos d'une route avec du trafic pour déterminer les trajectoires des véhicules détectés. Dans l'article de K. Messaoud, I. Yahiaoui, A. Verroust-Blondet and F. Nashashibi, "Attention Based Vehicle Trajectory Prediction," in IEEE Transactions on Intelligent Vehicles, vol. 6, no. 1, pp. 175-185, March 2021, doi: 10.1109/TIV.2020.2991952, un réseau de neurones est également utilisé pour prédire l'évolution des autres véhicules, en intégrant les interactions entre les différents véhicules.

US 11 195 418 B1 et l'article "Automated turning and merging for autonomous vehicles using a Nonlinear Model Predictive Control" (DOI: 10.23919/ACC.2017.7963814) portent également sur la prédiction du mouvement d'objets dynamiques.

Les prédictions basées sur des modèles physiques de véhicules ne permettent pas d'intégrer la notion d'intention d'un objet mobile, par exemple un véhicule, et ne permettent pas de calculer les prédictions à long terme nécessaires pour une bonne anticipation par le véhicule autonome.

La déduction de la manœuvre conjointement à la prédiction basée sur un modèle permet d'augmenter l'horizon de prédiction. Cependant, l'approche décrite dans l'article intitulé "Vehicle trajectory prediction based on motion model and maneuver recognition" limite les manœuvres possibles au suivi ou au changement de voie, ou au virage, ce qui peut être suffisant pour réaliser les prédictions sur autoroute ou dans un environnement péri-urbain mais qui peut être limité dans des conditions urbaines.

Les méthodes basées sur les réseaux de neurones et l'apprentissage permettent d'obtenir des prédictions cohérentes avec la réalité du comportement général des conducteurs. Cependant, ces approches nécessitent de nombreuses données d'entrée pour couvrir l'ensemble des situations possibles. Ceci peut représenter une contrainte importante pour réaliser des prédictions en environnement urbain en raison de la multiplicité des situations de conduite que l'on peut rencontrer. En effet, si un réseau de neurone est entraîné à prédire les trajectoires sur des données enregistrées sur autoroute, il n'est pas garanti que ces prédictions soient pertinentes dans un environnement urbain.

**Résumé de la présente invention**

Un objet de la présente invention est de résoudre au moins un des inconvénients de l'arrière-plan technologique.

Un autre objet de la présente invention est d'améliorer le contrôle de la trajectoire d'un véhicule autonome.

Un autre objet de la présente invention est de réduire les temps de calcul et/ou de diminuer les ressources nécessaires au calcul d'une trajectoire d'un objet mobile dans l'environnement du véhicule autonome.

Un autre objet de la présente invention est de permettre la planification d'une trajectoire optimale pour un véhicule autonome dans un environnement dans lequel se déplacent un ou plusieurs objets mobiles, en assurant la sécurité du véhicule et de ses passagers.

Selon un premier aspect, la présente invention concerne un procédé de contrôle de trajectoire d'un véhicule autonome circulant dans un environnement comprenant un objet mobile, le véhicule autonome embarquant un ensemble de capteurs de détection d'objet, le procédé comprenant les étapes suivantes :

- détermination d'un ensemble d'informations dynamiques courantes associées à l'objet mobile à partir de données dynamiques de l'objet mobile obtenues de l'ensemble de capteurs de détection d'objet et détermination d'une matrice de covariance courante de l'ensemble d'informations dynamiques à partir des données dynamiques et de caractéristiques de l'ensemble de capteurs de détection d'objets, l'ensemble d'informations dynamiques courantes comprenant une première information représentative d'une position courant de l'objet mobile, une deuxième information représentative d'une orientation courante de l'objet mobile et une troisième information représentative d'une vitesse courante de l'objet mobile ;

- détermination d'un ensemble de chemins candidats de l'objet mobile en fonction de la première information et de données de cartographie de l'environnement, chaque chemin candidat de l'ensemble étant défini par un ensemble de positions successives de l'objet mobile le long de chaque chemin candidat sur un horizon de distance déterminé ;

- pour chaque chemin candidat :

  • détermination d'une matrice de covariance associée à chaque position de l'objet mobile le long du chemin candidat à partir de la matrice de covariance courante ;

  • détermination d'un polygone représentatif de l'objet mobile en chaque position en fonction de données représentatives de dimensions de l'objet mobile et en fonction d'une incertitude de position et d'une incertitude d'orientation déterminées à partir de la matrice de covariance associée à chaque position ;

  • détermination d'un profil de vitesse maximale et d'un profil de vitesse minimale le long du chemin candidat en fonction d'une vitesse de l'objet mobile en chaque position le long du chemin candidat obtenue de la troisième information et en fonction d'une incertitude de vitesse déterminée à partir de la matrice de covariance ;

  • détermination d'une quatrième information représentative d'occupation temporelle d'un espace correspondant au polygone en chaque position, la quatrième information étant déterminée en fonction d'un instant minimal et d'un instant maximal déterminés respectivement à partir du profil de vitesse maximale et du profil de vitesse minimale ;

- contrôle de trajectoire du véhicule autonome en fonction des quatrièmes information associées à chaque chemin candidat de l'ensemble de chemins candidats.

Un tel mode de réalisation présente par exemple l'avantage de n'utiliser qu'un ensemble de données restreints, c'est-à-dire les données dynamiques de chaque objet mobile, les caractéristiques des capteurs de détection d'objet du véhicule autonome et les données de cartographie, sans nécessiter de phase d'apprentissage. Cela permet d'améliorer la rapidité des calculs et de faciliter une mise en œuvre temps réel.

Par ailleurs, l'utilisation des données de cartographies permet d'identifier des trajectoires cohérentes avec la route, et ainsi d'avoir des prédictions à plus long terme et cohérentes avec l'environnement et la conduite humaine (adaptation de la vitesse dans les virages par exemple). Ceci permet d'améliorer les capacités d'anticipation de de la planification de trajectoire pour le véhicule autonome, notamment dans un environnement urbain.

Selon une variante, la matrice de covariance associée à chaque position de l'objet mobile le long de chaque chemin candidat correspond à la matrice de covariance courante.

Selon une autre variante, le profil de vitesse maximale et le profil de vitesse minimale sont déterminés en fonction d'un type de l'objet mobile.

Selon une variante supplémentaire :

- lorsque l'objet mobile correspond à un piéton, une vitesse de l'objet mobile en chaque position de l'objet mobile le long de chaque chemin candidat correspond à la troisième information ; et
- lorsque l'objet mobile correspond à un véhicule, une vitesse de l'objet mobile en chaque position de l'objet mobile le long de chaque chemin candidat est obtenue en fonction d'un modèle d'accélération déterminé à partir de la troisième information et d'une information de limite de vitesse maximale le long du chemin candidat.

Selon encore une variante, la détermination du polygone en chaque position comprend la détermination d'une ellipse d'incertitude selon un niveau de confiance déterminé, l'ellipse d'incertitude étant déterminée à partir d'une sous-matrice obtenue de la matrice de covariance et correspondant à deux états représentatifs de position de l'objet mobile, chaque axe de l'ellipse d'incertitude étant déterminé à partir des vecteurs propres de la sous-matrice.

Selon une variante additionnelle, l'instant maximal associé à une première position de l'objet mobile le long d'un chemin candidat de l'ensemble de chemins candidats correspond à l'instant minimal associé à une deuxième position de l'objet mobile le long du chemin candidat, les première position et deuxième position se suivant successivement le long du chemin candidat.

Selon un deuxième aspect, la présente invention concerne un dispositif de contrôle de trajectoire d'un véhicule autonome, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile autonome, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

## Brève description des figures

D'autres caractéristiques et avantages de la présente invention ressortiront de la description des exemples de réalisation particuliers et non limitatifs de la présente invention ci-après, en référence aux figures 1 à 8 annexées, sur lesquelles :

[Fig. 1] illustre de façon schématique un environnement dans lequel évolue un véhicule autonome, selon un exemple de réalisation particulier de la présente invention ;

[Fig. 2] illustre schématiquement un processus de contrôle de la trajectoire du véhicule autonome de la figure 1, selon un exemple de réalisation particulier de la présente invention ;

[Fig. 3] illustre schématiquement une représentation par polygone d'un objet mobile se déplaçant dans l'environnement de la figure 1, selon un exemple de réalisation particulier de la présente invention ;

[Fig. 4] illustre schématiquement la détermination d'une incertitude sur la position de l'objet mobile de la figure 3, selon un exemple de réalisation particulier de la présente invention ;

[Fig. 5] illustre schématiquement la détermination d'une incertitude sur l'orientation de l'objet mobile de la figure 3, selon un exemple de réalisation particulier de la présente invention ;

[Fig. 6] illustre schématiquement une occupation de l'espace en fonction du temps selon une trajectoire lente et une trajectoire rapide de l'objet mobile de la figure 3, selon un exemple de réalisation particulier de la présente invention ;

[Fig. 7] illustre schématiquement un dispositif configuré pour le contrôle de la trajectoire du véhicule autonome de la figure 1, selon un exemple de réalisation particulier de la présente invention ;

[Fig. 8] illustre schématiquement un organigramme des différentes étapes d'un procédé de contrôle de trajectoire du véhicule autonome de la figure 1, selon un exemple de réalisation particulier de la présente invention.

## Description des exemples de réalisation

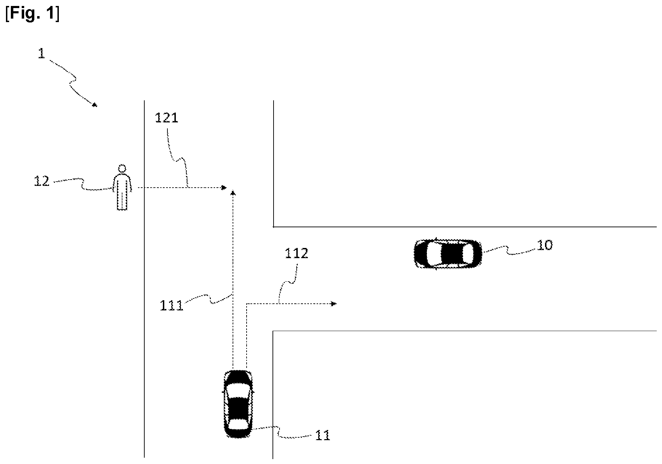

Un procédé et un dispositif de contrôle de trajectoire d'un véhicule autonome vont maintenant être décrits dans ce qui va suivre en référence conjointement aux figures 1 à 8. Des mêmes éléments sont identifiés avec des mêmes signes de référence tout au long de la description qui va suivre.

Selon un exemple particulier et non limitatif de réalisation de la présente invention, le contrôle de la trajectoire d'un véhicule autonome embarquant un ensemble de capteurs de détection d'objet et circulant dans un environnement comprenant un objet mobile est mis en œuvre par un ou plusieurs processeurs d'un ou plusieurs calculateurs embarqués dans le véhicule autonome, par exemple un ou plusieurs calculateurs d'un ou plusieurs systèmes ADAS du véhicule autonome. Le véhicule autonome détermine dans un premier temps des informations dynamiques courantes, c'est-à-dire à un instant courant, sur chaque objet mobile de son environnement, par exemple à partir de données reçues des capteurs embarqués. A partir de ces données et des caractéristiques des capteurs, une matrice de covariance courante des informations dynamiques est également déterminée. Les informations dynamiques courantes comprennent avantageusement une première information de position courante de l'objet mobile, une deuxième information d'orientation courante de l'objet mobile et une troisième information de vitesse courante de l'objet mobile. Un ensemble de chemins candidats de l'objet mobile sont déterminés à partir de la première information de position et de données de cartographies de l'environnement, ces données étant par exemple stockées dans une mémoire accessible par le ou les calculateurs en charge du contrôle de la trajectoire et/ou reçues d'un dispositif distant, par exemple un serveur, via une connexion sans fil. Chaque chemin candidat comprend un ensemble de positions successives prises par l'objet mobile le long du chemin candidat sur un horizon de distance déterminé (exprimé par exemple en mètres ou en secondes). L'objet mobile est représenté à l'aide d'un polygone, représentant l'empreinte au sol de l'objet mobile, en prenant en compte les incertitudes de position et d'orientation obtenues à partir de matrices de covariances déterminées pour chacune des positions le long de chaque chemin à partir de la matrice de covariance courante. Un profil de vitesse maximale et un profil de vitesse minimale sont déterminés le long du chemin candidat en fonction d'une part d'une vitesse de l'objet mobile, pour chaque position le long du chemin candidat, obtenue de la troisième information de vitesse courante et d'autre part d'une incertitude de vitesse déterminée à partir de la matrice de covariance. Les profils de vitesse permettent de déterminer à quel instant au plus tôt et à quel instant au plus tard l'objet mobile atteint ou occupe une position le long du chemin. Ces informations temporelles permettent de déterminer l'occupation de l'objet mobile en fonction du temps en chaque position le long de chaque chemin candidat. La trajectoire du véhicule autonome est alors contrôlée de manière à éviter une collision avec l'objet mobile, connaissant les informations sur l'occupation spatio-temporelle de l'objet mobile le long de chaque chemin candidat.

Des exemples de réalisations particuliers sont décrits de manière plus détaillée ci-après, ces exemples de réalisation mettant en évidence certains avantages du procédé.

Un tel procédé présente par exemple l'avantage de n'utiliser qu'un ensemble de données restreints, c'est-à-dire les données dynamiques de chaque objet mobile, les caractéristiques des capteurs de détection d'objet du véhicule autonome et les données de cartographie, sans nécessiter de phase d'apprentissage. Cela permet d'améliorer la rapidité des calculs et de faciliter une mise en œuvre temps réel.

Par ailleurs, l'utilisation des données de cartographies permet d'identifier des trajectoires cohérentes avec la route, et ainsi d'avoir des prédictions à plus long terme et cohérentes avec l'environnement et la conduite humaine (adaptation de la vitesse dans les virages par exemple). Ceci permet d'améliorer les capacités d'anticipation de de la planification de trajectoire pour le véhicule autonome, notamment dans un environnement urbain.

Le vocabulaire suivant sera utilisé dans le reste de la description :

- chemin : un chemin correspond à un objet géométrique représentant le déplacement spatial d'un véhicule sans considération de vitesse. La représentation du chemin et sa discrétisation sont donc indépendantes du temps, une telle représentation étant par exemple arbitraire (nombre de points fixé ou déterminé) ou déterminée par une longueur entre chaque point ;

- trajectoire : une trajectoire est un objet géométrique représentant le déplacement spatial et temporel d'un véhicule. La représentation d'une trajectoire et sa discrétisation sont directement dépendantes du temps : à chaque point d'une trajectoire est avantageusement associé un temps auquel la position sera atteinte ;
- couple chemin / vitesse : un couple chemin/vitesse correspond à l'association d'une vitesse à respecter (ou vitesse de consigne) à chaque point du chemin, une telle association étant également appelée profil de vitesse sur le chemin. Un couple chemin/vitesse est par exemple transformé en trajectoire en rééchantillonnant les points du chemin de sorte que chaque point de la trajectoire corresponde à la position atteinte après avoir parcouru le chemin pendant un intervalle de temps donné en suivant le profil de vitesse.

La figure 1 illustre schématiquement un environnement 1 dans lequel évolue un véhicule autonome 10, selon un exemple de réalisation particulier et non limitatif de la présente invention.

La figure 1 illustre une portion d'environnement routier 1 dans lequel circule le véhicule 10. Cet environnement correspond par exemple à un environnement urbain. Selon l'exemple particulier et non-limitatif de la figure 1, le véhicule 10 est en approche d'un carrefour.

Le véhicule 10 correspond avantageusement à un véhicule autonome. Un véhicule autonome correspond à un véhicule équipé d'un système d'aide à la conduite abouti assurant le contrôle du véhicule qui est apte à rouler dans son environnement routier avec une intervention limitée du conducteur, voire sans intervention du conducteur. Un véhicule autorisant un tel mode de conduite autonome doit avoir un niveau de conduite autonome au moins égal à 2, que ce soit dans la classification éditée par l'agence fédérale chargée de la sécurité routière aux USA qui comprend 5 niveaux ou dans la classification éditée par l'organisation internationale des constructeurs automobiles qui comprend 6 niveaux.

Le véhicule 10 correspond par exemple à un véhicule à moteur thermique, à un véhicule électrique ou à un véhicule hybride (combinant moteur thermique et moteur électrique).

Le véhicule 10 suit avantageusement un itinéraire déterminé dans l'environnement 1, cet itinéraire étant par exemple calculé à partir d'un ensemble de données comprenant par exemple la position courante du véhicule 10 et une destination. Selon une variante, les données comprennent en outre des données de cartographie de l'environnement du véhicule 10. La position du véhicule 10 est par exemple obtenue via un système de localisation par satellite, par exemple un système GPS (de l'anglais « Global Positioning System » ou en français « Système mondial de positionnement »). Un tel système est par exemple intégré au véhicule 10, par exemple mis en œuvre par un calculateur du système embarqué du véhicule 10, ou par un dispositif mobile (par exemple un téléphone intelligent) embarqué dans le véhicule 10 et communiquant avec le véhicule 10 par liaison radio (par exemple en Bluetooth® ou en Wifi®). La destination est par exemple entrée par le conducteur du véhicule 10 dans un système de calcul d'itinéraire via une interface graphique tactile ou une interface à commande vocale. Un tel système est par exemple mis en œuvre par un calculateur du système embarqué du véhicule 10, ou par un dispositif mobile (par exemple un téléphone intelligent) embarqué dans le véhicule 10 et communiquant avec le véhicule 10 par liaison radio. Les données de cartographie sont par exemple reçues d'un serveur distant, par exemple au fur et à mesure du déplacement du véhicule 10. Selon un autre exemple, les données de cartographies sont stockées en mémoire d'un système embarqué dans le véhicule 10 et/ou en mémoire du dispositif mobile.

Le véhicule 10 obtient avantageusement un ensemble de données représentatives de l'environnement 1 dans lequel le véhicule 10 évolue. Ces données comprennent par exemple :

- des données sur la présence d'objet(s) mobile(s) ou dynamique(s) (par exemple un autre véhicule 11, un piéton 12, un cycliste) dans l'environnement du véhicule 10, ces données comprenant par exemple des informations de distance entre chaque obstacle et le véhicule 10, la forme et/ou le gabarit de chaque obstacle et/ou des informations sur la trajectoire suivie par chaque objet mobile 11, 12 ; et/ou
- des données associées à l'environnement routier, telles que par exemple des informations sur les limites de vitesse, sur la présence de panneaux de circulation, de feux de circulation (avec par exemple l'état du feu de circulation), des informations sur le trafic routier dans l'environnement 1, sur la présence de travaux, sur les conditions climatiques, c'est-à-dire toute information ou donnée susceptible d'avoir un impact sur les conditions de circulation du véhicule 10 et sur les règles de conduite à adopter par le véhicule 10.

Les données d'environnement, ou au moins une partie d'entre elles, sont par exemple obtenues d'un ou plusieurs capteurs embarqués dans le véhicule 10. De tels capteurs sont associés ou font partie d'un ou plusieurs systèmes de détection d'objet embarqués dans le véhicule 10, les données obtenues de ce ou ces capteurs permettant par exemple de déterminer la vitesse du ou des objets détectés dans l'environnement du véhicule 10 et/ou la nature ou le type des objets détectés (panneau, véhicule 11, piéton 12, le type de l'objet étant par exemple déterminé par classification ou par mise en œuvre d'intelligence artificielle). Ce ou ces systèmes de détection d'objet sont par exemple associés à ou compris dans un ou plusieurs systèmes d'aide à la conduite, dit système(s) ADAS (de l'anglais « Advanced Driver-Assistance System » ou en français « Système d'aide à la conduite avancé »).

Le ou les capteurs associés à ces systèmes de détection d'objet correspondent par exemple à un ou plusieurs des capteurs suivants :

- un ou plusieurs radars à ondes millimétriques arrangés sur le véhicule 10, par exemple à l'avant, à l'arrière, sur chaque coin avant/arrière du véhicule ; chaque radar est adapté pour émettre des ondes électromagnétiques et pour recevoir les échos de ces ondes renvoyées par un ou plusieurs objets, dans le but de détecter des obstacles et leurs distances vis-à-vis du véhicule 10 ; et/ou
- un ou plusieurs LIDAR(s) (de l'anglais « Light Detection And Ranging », ou « Détection et estimation de la distance par la lumière » en français), un capteur LIDAR correspondant à un système optoélectronique composé d'un dispositif émetteur laser, d'un dispositif récepteur comprenant un collecteur de lumière (pour collecter la partie du rayonnement lumineux émis par l'émetteur et réfléchi par tout objet situé sur le trajet des rayons lumineux émis par l'émetteur) et d'un photodétecteur qui transforme la lumière collectée en signal électrique ; un capteur LIDAR permet ainsi de détecter la présence d'objets situés dans le faisceau lumineux émis et de mesurer la distance entre le capteur et chaque objet détecté ; et/ou
- une ou plusieurs caméras (associées ou non à un capteur de profondeur) pour l'acquisition d'une ou plusieurs images de l'environnement autour du véhicule 10 se trouvant dans le champ de vision de la ou les caméras.

Selon une variante, les deuxièmes données, ou au moins une partie d'entre elles, sont par exemple obtenues via un système de communication de type V2X (de l'anglais « Vehicle to Everything » ou en français « Véhicule vers tout »). Selon une autre variante, les deuxièmes données sont à la fois obtenues du système de communication V2X et du ou des capteurs embarqués dans le véhicule 10. Par exemple, les données relatives à la présence d'un autre véhicule 11 ou d'un piéton 12 dans l'environnement 1 du véhicule 10 sont communiquées par le véhicule 11 ou le piéton au véhicule 10, via une liaison sans fil selon un mode de communication véhicule à véhicule dit V2V (de l'anglais « vehicle-to-vehicle ») ou un mode de communication véhicule à piéton dit V2P (de l'anglais « vehicle-to-pedestrian »), ou par l'intermédiaire d'une infrastructure mise en place dans le cadre d'une communication véhicule à infrastructure V2I (de l'anglais « vehicle-to-infrastructure »), dans le cadre d'une infrastructure réseau utilisant des technologies de communication telles que l'ITS G5 (de l'anglais « Intelligent Transportation System G5 » ou en français « Système de transport intelligent G5 ») en Europe ou DSRC (de l'anglais « Dedicated Short Range Communications » ou en français « Communications dédiées à courte portée ») aux Etats-Unis d'Amérique qui reposent tous les deux sur le standard IEEE 802.11p ou encore la technologie basée sur les réseaux cellulaires nommée C-V2X (de l'anglais « Cellular - Vehicle to Everything » ou en français « Cellulaire - Véhicule vers tout ») qui s'appuie sur la 4G basé sur LTE (de l'anglais « Long Term Evolution » ou en français « Evolution à long terme ») et la 5G.

Ces données transitent par exemple via une infrastructure réseau comprenant un ou plusieurs serveurs du cloud (ou « nuage » en français) et une ou plusieurs antennes et/ou une ou plusieurs UBR (« Unité Bord de Route »).

Un objet mobile correspond à un objet apte à se déplacer, un tel objet mobile pouvant être en mouvement ou à l'arrêt à un instant déterminé.

Le ou les chemins que chaque objet mobile 11, 12 est susceptible de suivre sont illustrés par des flèches en pointillés sur la figure 1. De tels chemins sont appelés chemins candidats dans le reste de la description, une incertitude quant au réel suivi d'un chemin candidat ou d'un autre existant en fonction de la volonté de l'objet mobile.

A titre d'exemple, deux chemins candidats 111, 112 sont identifiés pour l'objet mobile 11, qui correspond à un véhicule automobile selon l'exemple de la figure 1. De tels chemins candidats sont par exemple déterminés ou identifiés en fonction de la cartographie de l'environnement 1.

Un seul chemin candidat 121 est identifié pour l'objet mobile 12, qui correspond à un piéton. Cet unique chemin candidat correspond par exemple au seul chemin ayant un impact sur la trajectoire du véhicule autonome en ce qu'il traverse la route que le véhicule autonome 10 est susceptible de suivre.

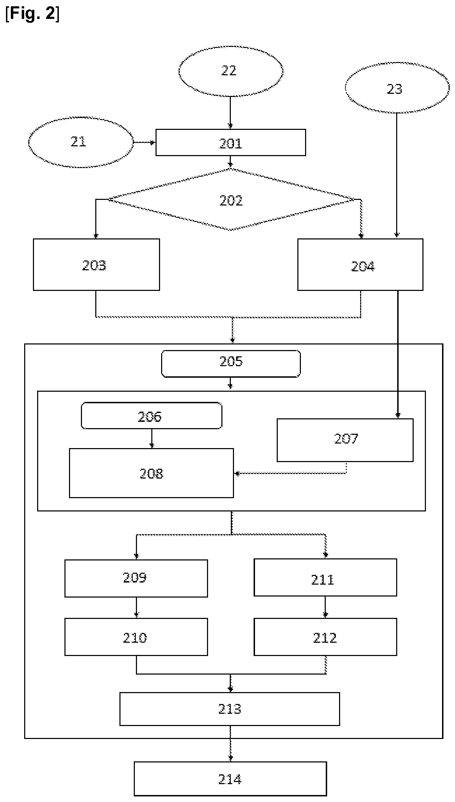

Le véhicule 10 met avantageusement en œuvre un processus d'évitement de collision avec les objets mobiles 11, 12 de son environnement en déterminant une trajectoire à suivre pour éviter ces objets mobiles, tel que décrit en regard de la figure 2 et des figures suivantes. Connaissant le chemin à suivre, la détermination d'une trajectoire revient à déterminer des valeurs d'accélération à appliquer, desquelles découlent des valeurs de vitesse de consigne pour le véhicule autonome 10 à associer aux points formant le chemin. La détermination de la trajectoire est par exemple en outre mise en œuvre en respectant un ensemble de contraintes telles qu'une vitesse maximale pour chaque point du chemin que se doit de respecter le véhicule autonome 10, une telle vitesse maximale déterminée en fonction de la situation (par exemple vitesse maximale autorisée, encombrement de la roue, danger, priorité à céder).

La régulation de la vitesse est par exemple mise en œuvre par un système ADAS du véhicule autonome tel qu'un système de régulation de vitesse, par un exemple un système de régulation adaptative de vitesse, dit ACC (de l'anglais « Adaptive Cruise Control »).

Sur la figure 1, le véhicule 10 suit un chemin 101, le véhicule 11 suit un chemin 111 et le piéton 12 suit un chemin 121.

La figure 2 illustre schématiquement un processus de contrôle de la trajectoire d'un véhicule autonome, par exemple le véhicule 10, selon un exemple de réalisation particulier et non limitatif de la présente invention. Un tel processus est avantageusement mis en œuvre par un ou plusieurs processeurs d'un ou plusieurs calculateurs embarqués dans le véhicule autonome 10.

Un tel processus exploite la connaissance du réseau routier, via les données de cartographies, pour déterminer l'ensemble des chemins possibles pour chaque objet mobile, adapte la représentation spatiale de ces objets mobiles pour prendre en compte les incertitudes de perception, et introduit un modèle d'évolution longitudinal (vitesse) pour prédire, pour chaque objet mobile, une ou plusieurs trajectoire(s) temporelle(s) tenant compte des différentes incertitudes. Les prédictions sont alors par exemple fournies à un algorithme de planification de trajectoire, qui va les utiliser pour déterminer la trajectoire à suivre par le véhicule autonome.

Dans ce texte, les éléments (X, ζ, A, ...) représentent des éléments unitaires utilisés dans le développement de la solution. La notation {C} indique un ensemble d'éléments unitaires C. Par exemple, si C représente un chemin candidat, alors {C} représente un ensemble de chemins candidats.

Un des objets du processus est de prédire, pour chaque objet mobile ou dynamique 11, 12 distinct du véhicule autonome 10, son déplacement futur, en tenant compte des différentes incertitudes présentes dans les données de perception ou dans le modèle de prédiction de déplacement.

Le processus ci-dessous est décrit en prenant pour exemple un unique objet mobile 11, noté 'A.' L'invention s'applique naturellement à plusieurs objets identifiés en appliquant le processus décrit ci-après sur chaque objet mobile identifié.

Plusieurs hypothèses sur le déplacement futur des objets mobiles sont faites. L'hypothèse la plus forte est que les objets mobiles restent globalement dans leur voie, suivent la route et respectent les limitations de vitesse.

Les données d'entrées correspondent à :

- des données de cartographies 21 de l'environnement routier du véhicule autonome, ces données étant par exemple chargées au fur et à mesure du déplacement du véhicule autonome 10 ; ces données sont par exemple stockées dans une mémoire du véhicule 10 et/ou reçues d'un serveur distant via une connexion ou liaison sans fil entre le véhicule 10 et le serveur distant ;

- des données dynamiques courantes 22 associées à l'objet mobile 11, ces données, correspondant à un état filtré Xk de l'objet mobile A, étant par exemple obtenues de capteurs de détection d'objet du véhicule 10 à un instant courant, ces données comprenant des informations de position (x,y) dans un plan (X,Y) d'un repère global ou local au véhicule autonome 10, une information d'orientation courante '6' et une information de vitesse courante 'v' ;

- des données 23 représentatives d'une matrice de covariance P0k donnant les covariances des états filtrés dans Xk.

Par exemple, si on a le vecteur d'état filtré Xk suivant :

[Math 1]

$$Xk = \begin{pmatrix} x_k \\ y_k \\ \theta_k \\ v_k \end{pmatrix}$$

Alors on veut avoir la matrice de covariance initiale ou courante P0k suivante, où seules les composantes qui vont être exploitées dans le processus sont représentées :

[Math 2]

$$P0_k = \begin{bmatrix} \sigma_x^2 & cov(x,y) & \cdot & \cdot \\ cov(y,x) & \sigma_y^2 & \cdot & \cdot \\ \cdot & \cdot & \sigma_\theta^2 & \cdot \\ \cdot & \cdot & \cdot & \sigma_v^2 \end{bmatrix}$$

Les valeurs $\sigma_x^2, \sigma_y^2, \sigma_\theta^2$, et $\sigma_v^2$ correspondent au carré de l'écart-type de l'incertitude sur les états $x_k$, $y_k$, $\theta_k$ et $v_k$ et $cov(x_k,y_k) = cov(y_k,x_k)$ correspond à la covariance des états $x_k,y_k$. La matrice de covariance P0k est estimée à chaque instant à partir des données brutes de perception et des caractéristiques des capteurs (modèle de capteur, indications fournies par le fournisseur ou obtenues par calibration...), à l'aide d'un module d'estimation, par exemple un filtre de Kalman. Le filtre de Kalman est un observateur dit « prédicteur - correcteur », c'est-à-dire qu'il permet d'estimer les états d'un système observé (ici par exemple, un autre véhicule 11) en prédisant son état à l'instant k+1 à partir de l'état estimé à l'instant k à l'aide d'un modèle d'évolution (par exemple un modèle cinématique type « bicyclette »), et en corrigeant cette prédiction à l'aide des informations perçues à l'instant k+1. Dans le procédé de mise à jour du filtre, la matrice de covariance associée à l'état estimé est calculée et mise à jour à chaque itération, à partir de l'incertitude de perception (liée aux capteurs) et à l'incertitude de modèle (dépendant de la fiabilité du modèle de prédiction utilisé par rapport à la réalité).

Selon une variante, un autre module d'estimation, de filtrage ou de fusion de données connu de l'homme du métier et différent du filtre de Kalman est utilisé, tant qu'il fournit les données Xk et P0k.

Il est également supposé qu'une représentation du réseau routier est disponible sous la forme des données 21, par exemple avec une cartographie haute-définition dans laquelle sont représentées les différentes voies exploitables par les objets mobiles, et qui indique comment les voies sont reliées entre elles, par exemple à l'aide d'une matrice de connectivité.

Dans une première opération 201, un ensemble de chemins candidats de l'objet mobile 11 est déterminé en fonction de la première information et de données de cartographie de l'environnement, chaque chemin candidat de l'ensemble étant défini par un ensemble de positions successives de l'objet mobile le long de chaque chemin candidat sur un horizon de distance déterminé.

Sous l'hypothèse présentée ci-dessus, c'est-à-dire que l'objet mobile A suit la route, il est possible de déterminer les chemins que cet objet A peut suivre, appelés chemins candidats, à partir de la connaissance de sa position et du réseau routier. La figure 1 illustre une situation où l'objet mobile A 11 peut soit poursuivre tout droit via le chemin 111, soit tourner à droite selon le chemin 112 pour prendre la route à droite (du point de vue de la figure 1).

La position Xk de l'acteur A est projeté dans le réseau routier. Pour ce faire, le point 2D correspondant à Xk $(x_k,y_k)$ est projeté sur toutes les voies du réseau routier, et le point de projection le plus proche de Xk est recherché. Notons Hk ce point ainsi obtenu, et L la voie sur laquelle le point Hk est projeté. À partir de Hk et de L, il est possible de déterminer tous les chemins que l'objet mobile A 11 peut suivre sur un horizon de distance 'd' déterminé, calculant tous les chemins possibles dans le réseau avec les voies suivant L, et leurs suivantes et successivement, jusqu'à obtenir un chemin de longueur 'd'. Une structure d'arbre peut être utilisée pour éviter de dupliquer les positions parcourues plusieurs fois. Au final, un ensemble de chemins candidats 111, 112 {C} est obtenu, chacun constitué d'un ensemble de positions { $\zeta$ }.

La distance entre deux positions $\zeta$ peut être fixée arbitrairement de façon à avoir un bon compromis entre la densité (nombre de points), la couverture spatiale du déplacement (empreinte au sol évaluée) et le temps de traitement par l'algorithme de planification. En effet, avec une densité faible (peu de points), le temps de traitement est bas mais l'erreur commise dans la représentation de l'objet A 11 à chaque point par rapport à un déplacement continu est importante et la couverture spatiale est moins bonne. Avec une densité forte (beaucoup de points), la couverture spatiale est meilleure, mais le temps de traitement est plus important. A titre d'exemple, une distance de 1 à 2 mètres entre chaque point est utilisée.

L'horizon de distance 'd' peut être fixé arbitrairement, ou calculé par rapport à un horizon de temps et une vitesse. Par exemple, si l'algorithme de planification de trajectoire utilisé exploite un horizon temporel de 5 secondes, et que la vitesse maximale de l'objet mobile A 11 est de 50 km.h$^{-1}$, alors un horizon de distance de 5 * 50/3.6 ≈ 70 m est par exemple utilisé.

Selon un exemple de réalisation particulier, la position Xk n'étant pas nécessairement bien positionnée sur la voie donnée par le réseau routier, le vecteur de décalage V entre Xk et Hk est calculé. Chaque point $\zeta$ de chaque chemin C est alors translaté latéralement de la norme du vecteur V de façon à ce que les chemins obtenus soient cohérents avec la position perçue Xk.

Selon un autre exemple de réalisation particulier, selon les indications données par l'objet mobile A 11, un arbitrage peut être réalisé sur les chemins. Par exemple, si le véhicule 11 met en œuvre son clignotant droit, il peut être interprété que le véhicule 11 souhaite prendre la route à droite (chemin 112). De la même façon, une fois que le véhicule a commencé à tourner et est orienté vers la droite, il peut être interprété que le véhicule ne poursuivra pas le chemin 111. Dans ces cas, le chemin 111 peut être ignoré et supprimé de l'ensemble {C} des chemins candidats.

Dans une deuxième opération 202, il est vérifié si la projection de la position de A dans le réseau montre une incohérence, c'est-à-dire par exemple si la projection appartient à une voie, une route, un passage pour piéton, selon le type de l'objet A par exemple.

Dans une troisième opération 203, si la projection de la position de A dans le réseau routier ne montre pas d'incohérence, l'ensemble des chemins possibles pour A 11 sont extraits ou déterminés par propagation dans le réseau routier.

Dans une quatrième opération 204, si la projection de la position de A dans le réseau routier montre une incohérence, par exemple si l'orientation du véhicule 11 est très éloignée de l'orientation de la voie, alors il est possible de déduire que l'objet mobile A 11 ne suit pas le réseau routier. Dans ce cas, un chemin probable par défaut est déterminé ou sélectionné, par exemple un chemin qui continue tout droit.

Selon une variante de réalisation, le type de l'objet mobile A est pris en compte pour déterminer le ou les chemins candidats. Ainsi, selon le type de l'objet mobile A et de l'exhaustivité du réseau routier, le chemin calculé est adapté. Par exemple, si l'objet mobile est un piéton, les données relatives aux voies appropriées dans le réseau routier ne sont par exemple pas disponibles, comme par exemple lorsque le piéton 12 traverse en dehors d'un passage piéton. Dans ce cas, un chemin par défaut indiquant que le piéton poursuit son chemin tout droit est calculé. Cependant, si les chemins que le piéton peut emprunter sont connus et que son comportement est cohérent avec ceux-ci, il est possible de prédire dans ce cas que le piéton poursuivra sur ces chemins.

Dans une cinquième opération 205, l'ensemble de chemin(s) candidat(s) {C} sont obtenus en sortie des opérations 203 et 204.

Les opérations 206 à 213 suivantes sont mises en œuvre pour chaque chemin candidat C de l'ensemble {C}.

L'algorithme de planification locale considéré pour la suite utilise une représentation géométrique, polygonale de l'environnement. Il est donc nécessaire de représenter par un polygone la forme de l'objet mobile A sur chaque point des chemins de l'ensemble {C} déterminés précédemment. Cette représentation intègre avantageusement les incertitudes associées à la perception de la position de l'objet mobile de façon à augmenter la sécurité du système.

Dans une sixième opération 206, chaque position $\zeta_i$ (avec i allant de 1 à N, avec N le nombre total de positions le long du chemin candidat considéré) le long du chemin candidat considéré est étudiée, la septième opération 207 de détermination d'un polygone représentatif de l'objet mobile A 11 et la huitième opération 208 de détermination d'une matrice de covariance associée à chaque position de l'objet mobile le long du chemin candidat considéré sont mises en œuvres pour chaque position $\zeta_i$.

La matrice de covariance initiale ou courante P0k, correspondant par exemple au résultat du filtrage et de la fusion des données des capteurs pour obtenir la localisation de l'objet mobile A 11, est disponible en entrée de l'opération 208. Cette matrice initiale représente les incertitudes associées à la perception courante de l'objet mobile A 11 liées aux capteurs. Pour calculer les incertitudes sur chaque position $\zeta_i$ du chemin candidat prédit, il est nécessaire de disposer d'une matrice de covariance Pk,i.

Selon un exemple de réalisation particulier, la matrice Pk,i est égale à P0k pour tous les points $\zeta_i$.

Selon un autre exemple, la matrice Pk,i est adaptée sur chaque point de façon à représenter une incertitude sur le suivi du chemin par l'objet mobile A 11. Par exemple, dans les virages, l'incertitude associée au positionnement de l'objet mobile A 11 peut être augmentée en modifiant la matrice de covariance Pk,i. Une première option pour calculer rigoureusement la modification de la matrice de covariance revient à utiliser le modèle d'évolution associé au filtre de Kalman pour augmenter l'incertitude par rapport aux bruits de modèle, éventuellement en utilisant une régulation pour suivre le chemin.

Il sera supposé par la suite qu'une matrice de covariance Pk,i associée à chaque position $\zeta_i$ du chemin C est disponible.

Trois repères différents sont définis pour déterminer le polygone représentant l'objet mobile A 11, à savoir :

- R1 : repère global, centré sur une origine arbitraire, définissant une référence horizontale et verticale dans le plan 2D de la route, dans lequel l'état de l'objet mobile A suivi et sa matrice de covariance sont représentés ;
- R2 : repère local à l'objet mobile A considéré ; par exemple, pour un véhicule 11, le centre correspond au milieu de l'essieu arrière, l'axe X est aligné avec l'axe longitudinal du véhicule 11, et l'axe Y est aligné avec l'axe transversal ;
- R3 : repère de l'ellipse d'incertitude associée, centré sur le même point que R2 et dont l'axe X est aligné avec l'axe principal de l'ellipse.

Les trois composantes de $\zeta$ (position 2D et orientation pour l'objet mobile A) correspondent à la position (x,y) du milieu de l'essieu arrière et son orientation $\theta$, exprimées dans le repère global R1, avec la matrice de covariance Pk,i. Pour considérer cette incertitude de position, le polygone représentant l'objet mobile est élargi de façon à couvrir l'ensemble de l'espace que l'objet mobile A 11 est susceptible d'occuper.

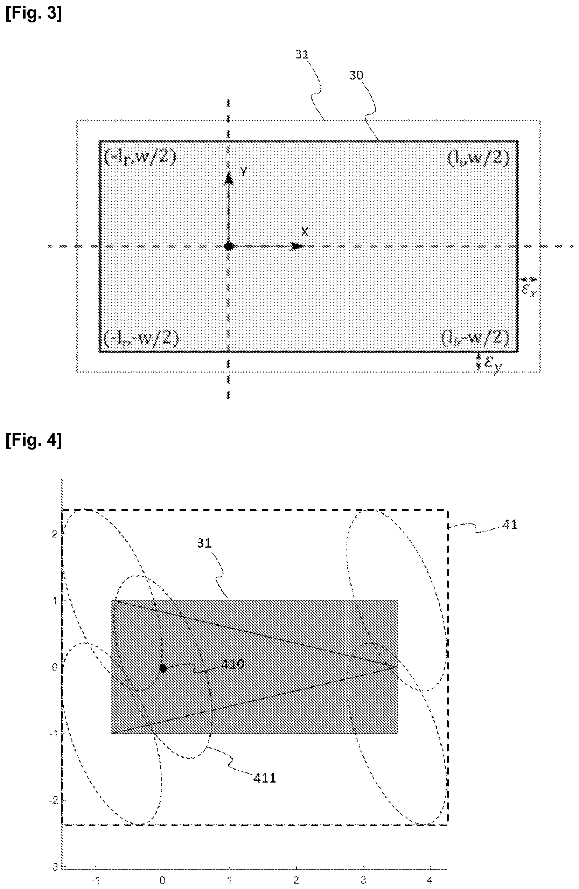

Un objet mobile est par exemple représenté par un rectangle, tel qu'illustré sur la figure 3, avec des dimensions obtenues à partir des capteurs, ou avec des dimensions génériques obtenues par classification de l'objet mobile A. Les calculs ci-dessous sont présentés avec l'exemple d'un véhicule 11 ayant les dimensions suivantes :

- $l_f$ la longueur entre le milieu de l'essieu arrière et l'avant du véhicule 11 ;
- $l_r$ la longueur entre le milieu de l'essieu arrière et l'arrière du véhicule 11 ; et
- w la largeur du véhicule 11.

Une boîte englobante alignée avec les axes du repère (AABB) pour un polygone est représentée par les positions extrêmes que le polygone prend sur chaque direction du repère. Quatre éléments sont donc nécessaires pour représenter une boîte englobante : les abscisses extrêmes $x_{min}$ et $x_{max}$, et les ordonnées extrêmes $y_{min}$ et $y_{max}$. Une boîte englobante

est par exemple représentée par une matrice 2D correspondant à la concaténation des points extrêmes en bas à gauche ($x_{min}$,$y_{min}$) et en haut à droite (Xmax,ymax) :

[Math 3]

$$AABB = \begin{bmatrix} x_{min} & x_{max} \\ y_{min} & y_{max} \end{bmatrix}$$

La boîte englobante initiale 30, notée $AABB_{ini}$, illustrée sur la figure 3 est obtenue, pour l'objet mobile A 11 considéré, dans le repère R2 local à l'objet mobile A et centré sur le milieu de l'essieu arrière dans le cas d'un véhicule 11 (point auquel la dérive est nulle dans les modèles simplifiés de véhicules) :

[Math 4]

$$AABB_{ini} = \begin{bmatrix} x_{min} = -l_r & x_{max} = l_f \\ y_{min} = -\dfrac{w}{2} & y_{max} = \dfrac{w}{2} \end{bmatrix}$$

Des marges de sécurité $\varepsilon_x$ et $\varepsilon_y$ selon respectivement l'axe X et l'axe Y sont par exemple ajoutées sur cette boîte englobante 30 pour obtenir la boite englobante 31, notée $AABB_{marges}$ :

[Math 5]

$$AABB_{marges} = \begin{bmatrix} -l_r - \varepsilon_x & l_f + \varepsilon_x \\ -\dfrac{w}{2} - \varepsilon_y & \dfrac{w}{2} + \varepsilon_y \end{bmatrix}$$

La figure 3 représente le gabarit 31 du véhicule 11 dans R2, selon un exemple particulier et non limitatif de la présente invention.

Le polygone 31 représentatif de l'objet mobile A, par exemple le véhicule 11, est agrandi ou élargi de sorte qu'il couvre toutes les positions possibles du véhicule 11 par rapport à l'incertitude, de position et d'orientation, associée, avec un certain niveau de confiance $\varepsilon$.

L'incertitude de position est obtenue à partir de caractéristiques d'une ellipse associée à la matrice de covariance Pk,i associée à la position $\zeta_i$ considérée et obtenue de l'opération 207.

On note Pxy la sous-matrice extraite de la matrice Pk,i correspondant aux deux états x,y représentatifs de position. À partir de Pxy, il est possible de calculer une ellipse d'incertitude autour de la position $\zeta_i$ au seuil de confiance $\varepsilon$. Par exemple, un seuil à 95% ($\varepsilon$ = 0.95) est utilisé, ou un seuil à 99% ($\varepsilon$ = 0.99) est utilisé. Un seuil à 95% signifie que la position réelle de l'objet mobile A est comprise dans l'ellipse autour de $\zeta_i$ dans 95% des cas.

La figure 4 illustre une telle ellipse 411 autour du point 410, selon un exemple particulier et non limitatif de réalisation.

Une ellipse dispose d'un axe principal (dans la direction la plus longue de l'ellipse) et d'un axe secondaire (dans la direction la plus courte). Puisqu'il y a deux dimensions à cette ellipse, la loi de probabilités dite du $\chi^2$ (chi-deux) à deux degrés de liberté. Il faut déterminer le coefficient $\gamma$ correspondant au seuil de confiance $\varepsilon$ à partir des tables de la loi. La valeur de $\gamma$ telle que :

[Math 6]

$$\mathbb{P}(X \leq \gamma) = \varepsilon$$

est recherchée avec X une variable aléatoire suivant une loi du $\chi^2$. Par exemple, pour $\varepsilon$ = 0.95, on obtient un coefficient $\gamma$ = 5.99.

La direction des axes de l'ellipse est donnée par les vecteurs propres de Pxy. Deux vecteurs propres $v_1$ et $v_2$, sont ainsi obtenus, ainsi que deux valeurs propres $\lambda_1$ et $\lambda_2$. Les valeurs propres sont données telles que $\lambda_1 \geq \lambda_2$. Les coefficients :

[Math 7]

$$a = \sqrt{\gamma \times \lambda_1}$$

et

[Math 8]

$$b = \sqrt{\gamma \times \lambda_2}$$

correspondant respectivement à la longueur respectivement de l'axe principal et de l'axe secondaire de l'ellipse sont ensuite calculés. L'équation paramétrique de l'ellipse s'écrit alors dans son repère R3 :

[Math 9]

$$\begin{cases} x_{R_3}(\phi) = a \cdot \cos\phi \\ y_{R_3}(\phi) = b \cdot \sin\phi \end{cases}, \phi \in [0, 2\pi]$$

Les vecteurs propres $v_1$ et $v_2$ donnent l'orientation de l'axe principal et secondaire respectivement, exprimés dans le repère global R1. Il est donc possible de calculer l'angle $\Psi_{3\text{-}1}$ entre le repère R3 et le repère R1 à partir du vecteur propre $v_1$. L'ellipse s'exprime dans le repère R2 en appliquant une rotation d'angle $\Psi_{3\text{-}2}$. Cet angle est calculé par $\Psi_{3\text{-}2}$ = $\Psi_{3\text{-}1}$ - θ.

Le polygone 31 représentatif du véhicule 11 est étendu par rapport aux dimensions de cette ellipse 411. Pour cela, on se place dans le repère du véhicule 11 R2. L'ellipse d'incertitude de position 411 est positionné sur chaque sommet du polygone 31.

L'agrandissement du polygone 31 est défini à partir de la taille de l'ellipse d'incertitude dans ce repère R2. On cherche donc à exprimer le maximum et le minimum de l'ellipse sur chaque dimension dans R2.

La transformation de l'ellipse 411 permet d'écrire son équation paramétrique dans R2 :

[Math 10]

$$\begin{pmatrix} x(\phi) \\ y(\phi) \end{pmatrix}_{R_2} = \begin{bmatrix} \cos\psi_{3-2} & -\sin\psi_{3-2} \\ \sin\psi_{3-2} & \cos\psi_{3-2} \end{bmatrix} \times \begin{pmatrix} x(\phi) \\ y(\phi) \end{pmatrix}_{R_3}$$

$$= \begin{pmatrix} a \cdot \cos\phi \cdot \cos\psi_{3-2} - b \cdot \sin\phi \cdot \sin\psi_{3-2} \\ a \cdot \cos\phi \cdot \sin\psi_{3-2} + b \cdot \sin\phi \cdot \cos\psi_{3-2} \end{pmatrix}$$

Les valeurs extrêmes de $x_{R2}$ et $y_{R2}$ sont recherchées. En utilisant l'identité trigonométrique suivante, il est possible de réécrire la somme des sinus et cosinus avec une seule fonction :

[Math 11]

$$A \cdot \cos(x) + B \cdot \sin(x) = C \cdot \cos(x + D)$$

[Math 12]

$$C = \text{sgn}(A) \cdot \sqrt{A^2 + B^2}$$

[Math 13]

$$D = \operatorname{atan}\left(-\frac{B}{A}\right)$$

En appliquant cette identité à l'expression de $x_{R2}$, on trouve :

[Math 14]

$$A = a \cdot \cos \psi_{3-2}$$

Et

[Math 15]

$$B = b \cdot \sin \psi_{3-2}$$

Ce qui permet d'obtenir (l'expression de D n'étant pas utile) :

[Math 16]

$$x_{R_2}(\phi) = \operatorname{sgn}(a \cdot \cos \psi_{3-2}) \cdot \sqrt{a^2 \cdot \cos^2 \psi_{3-2} + b^2 \cdot \sin^2 \psi_{3-2}} \cdot \cos(\phi + D)$$

Les valeurs maximales et minimales prises par $x_{R2}$ valent ainsi :

[Math 17]

$$\max x_{R_2}(\phi) = \sqrt{a^2 \cdot \cos^2 \psi_{3-2} + b^2 \cdot \sin^2 \psi_{3-2}}$$

[Math 18]

$$\min x_{R_2}(\phi) = -\sqrt{a^2 \cdot \cos^2 \psi_{3-2} + b^2 \cdot \sin^2 \psi_{3-2}}$$

Un raisonnement analogue pour $y_{R2}$ permet d'obtenir :

[Math 19]

$$\max y_{R_2}(\phi) = \sqrt{a^2 \cdot \sin^2 \psi_{3-2} + b^2 \cdot \cos^2 \psi_{3-2}}$$

[Math 20]

$$\min y_{R_2}(\phi) = -\sqrt{a^2 \cdot \sin^2 \psi_{3-2} + b^2 \cdot \cos^2 \psi_{3-2}}$$

Il est remarqué que ces valeurs extrêmes sont centrées autour de 0 410, ce qui est logique dans R2 car le repère est centré sur le centre de l'ellipse.

En étendant la boîte englobante 31 à partir des bornes de l'ellipse, il est obtenu la boite englobante $AABB_{inc,xy}$ suivante :

[Math 21]

$$AABB_{inc,xy} = AABB_{marges} + \begin{bmatrix} \min x_{R_2}(\phi) & \max x_{R_2}(\phi) \\ \min y_{R_2}(\phi) & \max y_{R_2}(\phi) \end{bmatrix}$$

Il s'agit bien d'une addition car les minima de $x_{R2}$ et $y_{R2}$ sont négatifs.

La figure 4 présente le résultat de l'encadrement incluant les incertitudes sur x et y, le résultat correspondant au polygone 41 formant la boite englobante autour de l'objet mobile A en prenant en compte les incertitudes de position sur x et y.

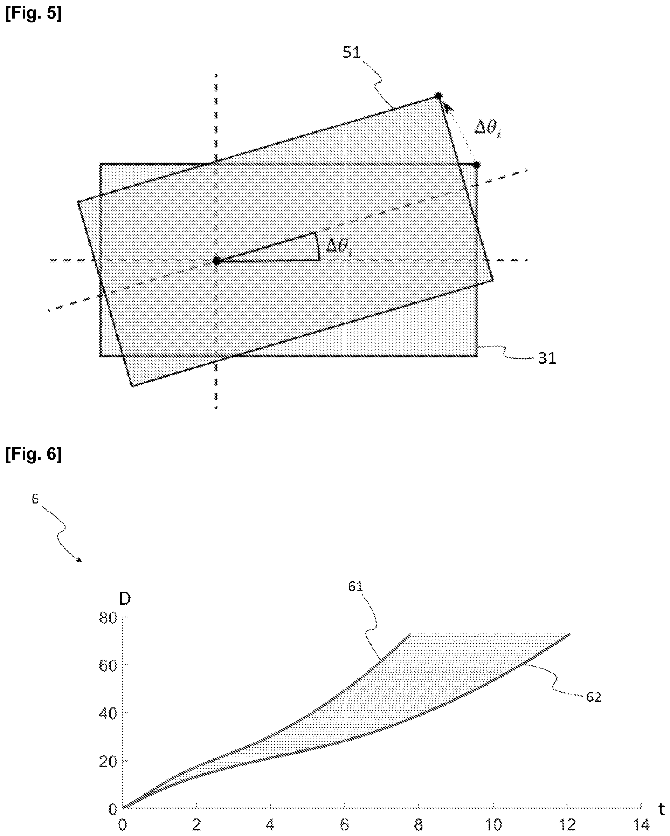

Concernant l'incertitude sur l'orientation notée $\theta_i$ : avec une incertitude $\Delta\theta_i$, on suppose que le véhicule 11 peut avoir une orientation dont la valeur est entre $\theta_i + \Delta\theta_i$ et $\theta_i - \Delta\theta_i$. Il est possible de déduire les dimensions maximales du véhicule 11 par rotation des points extrêmes autour du milieu de l'essieu arrière, comme illustré par la figure 5. L'incertitude $\Delta\theta_i$ est obtenue à partir de la matrice de covariance Pk,i, à partir de la valeur de $\sigma_e$ en fonction du seuil de confiance $\epsilon$ voulu. Il est par exemple possible de prendre $\Delta\theta_i = 2 * \sigma_\theta$, pour avoir un intervalle à environ 95% de confiance autour de la valeur estimée. Pour avoir une incertitude à un niveau de confiance $\epsilon = 1 - \alpha$, une table de la fonction de répartition de la loi normale est utilisée, et la valeur k telle que :

[Math 22]

$$\Phi(k) = 1 - \frac{\alpha}{2}$$

est recherchée, avec $\Phi$ représentant la fonction de répartition de la loi normale. Pour la suite, il est considéré que $\Delta\theta_i = k_\sigma$.

Dans le cas d'une rotation d'angle positif, les coordonnées du nouveau polygone 51 valent :

[Math 23]

$$\begin{bmatrix} \cos\Delta\theta_i & -\sin\Delta\theta_i \\ \sin\Delta\theta_i & \cos\Delta\theta_i \end{bmatrix} \times \begin{bmatrix} x_{min} & x_{max} & x_{max} & x_{min} \\ y_{max} & y_{max} & y_{min} & y_{min} \end{bmatrix}$$

Avec $x_{min}$, $x_{max}$, $y_{min}$, $y_{max}$ les valeurs obtenues à partir de $AABB_{inc,xy}$. Il est ainsi possible de mettre à jour les dimensions du polygone représentant l'objet mobile 11.

Il est à noter que si l'incertitude sur le cap est trop importante, alors le résultat des formules précédentes peut sous-estimer la couverture réelle. En effet, chaque point pouvant tourner sur un cercle autour du point de référence, le point peut atteindre une limite dans une direction avant de « reculer ».

En faisant l'hypothèse que l'incertitude sur l'orientation ne dépasse pas $\pi/2$, il est possible de calculer les angles correspondants à partir de la position des points extrêmes. On trouve ainsi, pour l'angle maximum pour l'incertitude longitudinale avant :

[Math 24]

$$\Delta\theta_{max,lon,av} = atan\left(\frac{y_{max}}{x_{max}}\right)$$

Pour l'incertitude longitudinale arrière :

[Math 25]

$$\Delta\theta_{max,lon,ar} = \pi - atan\left(\frac{y_{max}}{x_{min}}\right)$$

Et pour l'incertitude latérale :

[Math 26]

$$\Delta\theta_{max,lat} = \frac{\pi}{2} - atan\left(\frac{y_{max}}{x_{max}}\right)$$

Ainsi, pour chaque cas, si l'incertitude dépasse la valeur maximale définie ici, la valeur d'angle maximale est prise en compte pour calculer la nouvelle valeur.

Pour l'abscisse minimale, elle est mise à jour à partir de la rotation du point arrière gauche de l'objet mobile 11, soit :

[Math 27]

$$x'_{min} \leftarrow \cos\Delta\theta_i \cdot x_{min} - \sin\Delta\theta_i \cdot y_{max}$$

L'abscisse maximale est obtenue à partir de la rotation du point avant droit :

[Math 28]

$$x'_{max} \leftarrow \cos\Delta\theta_i \cdot x_{max} - \sin\Delta\theta_i \cdot y_{min}$$

L'ordonnée maximale est obtenue à partir de la rotation du point avant gauche :

[Math 29]

$$y'_{max} \leftarrow \sin\Delta\theta_i \cdot x_{max} + \cos\Delta\theta_i \cdot y_{max}$$

Par symétrie, l'ordonnée minimale vaut :

[Math 30]

$$y'_{min} \leftarrow -y'_{max}$$

L'augmentation finale du polygone associé au véhicule 11 dans le repère local et dans le repère global est obtenue en considérant les abscisses minimale et maximale et les ordonnées minimale et maximale ci-dessus.

En sortie des opérations 207 et 208, un ensemble de chemins candidats est fourni, avec pour chaque position de chaque chemin, un polygone associé correspondant à la forme de l'objet mobile A 11, élargie en fonction des incertitudes sur sa position et son orientation.

L'objet mobile A 11 va se déplacer le long du chemin candidat C considéré avec une vitesse déterminée. Un modèle pour prédire le profil de vitesse de l'objet mobile A le long du chemin C est fourni. L'objet des opérations 209 à 213 est de définir un profil de vitesse maximal (opération 209) et un profil de vitesse minimal (opération 211) pour pouvoir déterminer ensuite un temps d'arrivée minimal (opération 210) et un temps d'arrivée maximal sur chaque point (opération 212).

La vitesse perçue initialement pour l'objet mobile A est notée v, et $\Delta v$ l'incertitude de vitesse considérée, calculée à partir de la matrice de covariance Pk pour un seuil de confiance déterminée (voir méthode de calcul de l'incertitude $\Delta\theta_i$ plus haut). Un objet des opérations 209 à 213 est de déterminer la vitesse que suivra l'objet mobile A le long du chemin candidat considéré.

Modèle à vitesse constante

Selon un premier exemple de réalisation, un premier modèle correspond au modèle de maintien de vitesse constante. Il est alors supposé que sur chaque point $\zeta_i$ du chemin C, l'objet mobile A possède une vitesse correspondant à la vitesse perçue initialement. Le profil de vitesse maximal est donc donné par v + $\Delta v$, et le profil de vitesse minimal est donné par v - $\Delta v$. Ce modèle peut être adapté pour la prédiction de trajectoire d'un piéton par exemple.

Modèle d'accélération jusqu'à la vitesse règlementaire

Selon un deuxième exemple, un second modèle consiste à supposer que l'objet mobile A 11 va chercher à rejoindre la vitesse règlementaire, tout en adaptant sa vitesse dans les virages. Ce modèle permet une prédiction plus élaborée que le modèle précédent à vitesse constante, dans le cas où l'objet mobile A est un véhicule 11.

Concernant la vitesse règlementaire, le profil de vitesse est initialisé avec la vitesse perçue v sur le premier point du chemin C, puis avec la vitesse règlementaire applicable en chaque point du chemin C.

Ensuite, les valeurs des vitesses sont adaptées en fonction de la courbure k du chemin à chaque position, avec la relation :

[Math 31]

$$v = \sqrt{\frac{a_{lat}}{\kappa}}$$

Il est alors possible de définir un profil de vitesse minimum à l'opération 211 en considérant une accélération latérale faible (par exemple $a_{lat}$ = 1 m.s$^{-2}$), ce qui correspond à une approche conservative pour l'objet mobile A 11. De même, avec une accélération latérale forte (par exemple $a_{lat}$ = 4 m.s$^{-2}$), il est possible de calculer un profil de vitesse maximum à l'opération 209.

Selon un exemple de réalisation particulier, chaque profil de vitesse est ensuite lissé pour introduire une dynamique longitudinale. Le profil de vitesse minimum peut être lissé avec une accélération longitudinale faible (par exemple $a_{lon}$ = 1 m.s$^{-2}$), et le profil de vitesse maximum peut être lissé avec une accélération longitudinale forte (par exemple, $a_{lon}$ = 4 m.s$^{-2}$).

Les valeurs d'accélération utilisées ici sont données à titre indicatif par rapport à des indicateurs de confort globalement acceptés. Ces valeurs pourraient être déterminées plus précisément en analysant des données de conduite d'un grand nombre de conducteurs. L'analyse du comportement passé de l'objet mobile peut également permettre de donner une estimation plus fine de ces paramètres.

Pour intégrer l'incertitude sur la vitesse Δv, le profil de vitesse minimum est diminué de Δv, et le profil maximum de vitesse est augmenté de Δv.

Si l'objet mobile A 11 est initialement à l'arrêt, alors il est considéré qu'il va rester à l'arrêt. Ceci permet de pouvoir gérer les situations où l'acteur A cède la priorité au véhicule autonome 10. Une fois que l'objet mobile A est arrêté, le véhicule autonome 10 peut poursuivre sa route tant que cet objet mobile reste à l'arrêt. Dès lors que l'objet mobile A se remet en mouvement, une trajectoire d'accélération est générée.

Dans une opération 213, l'occupation de l'espace en fonction du temps par l'objet mobile A est déterminé à partir d'un temps minimal d'arrivée de l'objet mobile A dans une position déterminée, obtenue à l'opération 210, et à partir d'un temps maximal d'arrivée de l'objet mobile A dans la position déterminée, obtenue à l'opération 212.

À partir des profils de vitesse maximal et minimal sur le chemin, il est possible de déduire l'intervalle de temps auquel chaque position $\zeta_i$ sera atteinte, tel qu'illustré sur la figure 6. La figure 6 illustre un diagramme 6 avec deux fonctions de la distance D en mètres (en ordonnée) en fonction du temps t en secondes (en abscisse).

Une première fonction 61 est représentative d'une trajectoire minimale (plus rapide) selon un profil de vitesse maximal de l'objet mobile A. Une deuxième fonction 62 est représentative d'une trajectoire maximale (plus lente) selon un profil de vitesse minimal de l'objet mobile A.

La zone grisée entre les deux fonctions 61 et 62 représente l'occupation de l'espace par l'objet mobile A le long du chemin considéré en fonction du temps (c'est-à-dire la durée pendant laquelle l'objet mobile est susceptible d'occuper l'espace en un point donné le long du chemin candidat).

Il est ainsi constaté donc que l'objet mobile A peut se situer dans un certain intervalle spatio-temporel, cette information prenant par exemple la forme de quatrièmes informations d'occupation spatio-temporelle de l'espace le long de chaque chemin candidat. À partir du graphique 6, deux façons d'interpréter cet intervalle se présentent :

- A chaque temps t est associé un intervalle de positions ; ou

- A chaque position est associée dispose d'un intervalle de temps.

Intervalle de position à chaque temps

Selon un premier exemple de réalisation, un intervalle de position pour chaque temps est considéré. Cette alternative nécessite de recalculer le chemin C de telle sorte que chaque point du chemin corresponde à la position atteinte au temps futur correspondant. À chaque temps futur, un intervalle de position le long de l'abscisse curviligne du chemin $\Delta s_i$ est obtenu. Il est possible de représenter cet intervalle en allongeant le polygone représentant l'objet mobile 11 de manière cumulative le long du chemin.

Une certaine limite à cette prise en compte de l'incertitude sur le mouvement prédit existe cependant. En effet, l'allongement du polygone représentant l'objet mobile 11 donne un résultat pertinent quand le véhicule se déplace en ligne droite. En revanche, pour une intention suivant un virage, la représentation est moins pertinente.

Intervalle de temps à chaque position

Selon un deuxième exemple de réalisation, l'intervalle de temps minimum et maximum auquel la position considérée est occupée par l'objet mobile A est associé à chaque polygone, correspondant à chaque position sur le chemin. Pour le polygone Sj correspondant au polygone associé à la position $\zeta_j$ sur le chemin C, on associera en temps minimal le temps auquel la position $\zeta_j$ est atteinte avec le profil de vitesse maximal (correspondant au premier temps auquel la position est occupée), et en temps maximal le temps auquel la position $\zeta_{j+1}$ (position qui suit la position $\zeta_j$) est atteinte avec le profil de vitesse minimal (correspondant au premier temps auquel la position n'est plus occupée).

Une prédiction de l'occupation de l'espace dans le temps est ainsi obtenue à l'opération 213, une telle prédiction étant utilisée lors de l'opération 214 pour planifier ou déterminer une trajectoire pour le véhicule autonome permettant d'éviter une collision avec l'objet mobile A, connaissant l'occupation de l'espace dans le temps selon tous les chemins candidates pour cet objet mobile A.

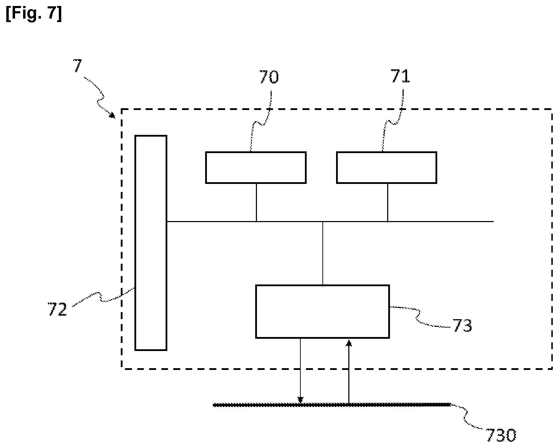

La figure 7 illustre schématiquement un dispositif 7 configuré pour contrôler la trajectoire d'un véhicule autonome, par exemple le véhicule autonome 10, selon un exemple de réalisation particulier et non limitatif de la présente invention. Le dispositif 7 correspond par exemple à un dispositif embarqué dans le véhicule 10, par exemple un calculateur.

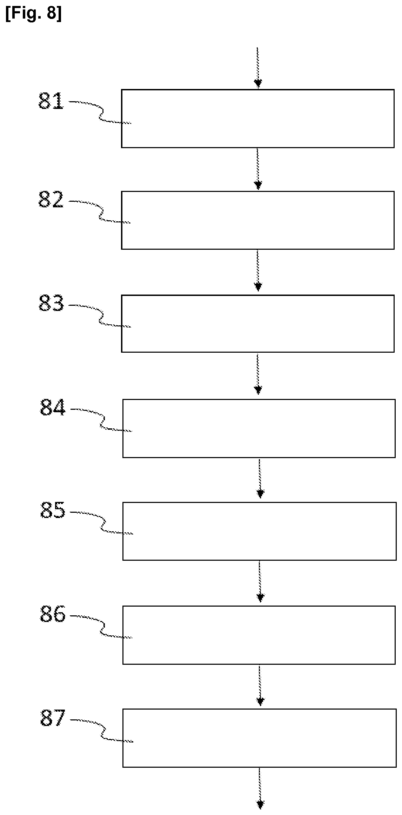

Le dispositif 7 est par exemple configuré pour la mise en œuvre des opérations décrites en regard des figure 1 à 6 et/ou pour la mise en œuvre des étapes décrites en regard de la figure 8. Des exemples d'un tel dispositif 7 comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif 7, individuellement ou en combinaison, peuvent être intégrés dans un unique circuit intégré, dans plusieurs circuits intégrés, et/ou dans des composants discrets. Le dispositif 7 peut être réalisé sous la forme de circuits électroniques ou de modules logiciels (ou informatiques) ou encore d'une combinaison de circuits électroniques et de modules logiciels. Selon différents modes de réalisation particuliers, le dispositif 7 est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Le dispositif 7 comprend un (ou plusieurs) processeur(s) 70 configurés pour exécuter des instructions pour la réalisation des étapes du procédé et/ou pour l'exécution des instructions du ou des logiciels embarqués dans le dispositif 7. Le processeur 70 peut inclure de la mémoire intégrée, une interface d'entrée/sortie, et différents circuits connus de l'homme du métier. Le dispositif 7 comprend en outre au moins une mémoire 71 correspondant par exemple une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 71.

Selon un mode de réalisation particulier et non limitatif, le dispositif 7 comprend un bloc 72 d'éléments d'interface pour communiquer avec des dispositifs externes, par exemple un serveur distant ou le « cloud ». Les éléments d'interface du bloc 72 comprennent une ou plusieurs des interfaces suivantes :

- interface radiofréquence RF, par exemple de type Bluetooth® ou Wi-Fi®, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif 7 via l'interface du bloc 72 en utilisant un réseau Wi-Fi® tel que selon IEEE 802.11, un réseau ITS G5 basé sur IEEE 802.11p ou un réseau mobile tel qu'un réseau 4G (ou LTE Advanced selon 3GPP release 10 - version 10) ou 5G, notamment un réseau LTE-V2X.

Selon un autre mode de réalisation particulier, le dispositif 7 comprend une interface de communication 73 qui permet d'établir une communication avec d'autres dispositifs (tels que d'autres calculateurs du système embarqué) via un canal de communication 730. L'interface de communication 73 correspond par exemple à un transmetteur configuré pour transmettre et recevoir des informations et/ou des données via le canal de communication 730. L'interface de communication 73 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un mode de réalisation particulier supplémentaire, le dispositif 7 peut fournir des signaux de sortie à un ou plusieurs dispositifs externes, tels qu'un écran d'affichage, un ou des haut-parleurs et/ou d'autres périphériques via respectivement des interfaces de sortie non représentées.

La figure 8 illustre un organigramme des différentes étapes d'un procédé de contrôle de trajectoire d'un véhicule autonome, par exemple le véhicule 10, selon un exemple de réalisation particulier et non limitatif de la présente invention. Le procédé est par exemple mis en œuvre par un ou plusieurs dispositifs embarqués dans le véhicule 10 ou par un ou plusieurs dispositifs 7 de la figure 7.

Dans une première étape 81, un ensemble d'informations dynamiques courantes associées à l'objet mobile est déterminé à partir de données dynamiques de l'objet mobile obtenues de l'ensemble de capteurs de détection d'objet et une matrice de covariance courante de l'ensemble d'informations dynamiques est déterminée à partir des données dynamiques et de caractéristiques de l'ensemble de capteurs de détection d'objets. L'ensemble d'informations dynamiques courantes comprend une première information représentative d'une position courant de l'objet mobile, une deuxième information représentative d'une orientation courante de l'objet mobile et une troisième information représentative d'une vitesse courante de l'objet mobile.

Dans une deuxième étape 82, un ensemble de chemins candidats de l'objet mobile est déterminé en fonction de la première information et de données de cartographie de l'environnement, chaque chemin candidat de l'ensemble étant défini par un ensemble de positions successives de l'objet mobile le long de chaque chemin candidat sur un horizon de distance déterminé.

Les étapes 83 à 86 sont mises en œuvre, par exemple en parallèle, pour chaque chemin candidat de l'ensemble déterminé à l'étape 82.

Dans une troisième étape 83, une matrice de covariance associée à chaque position de l'objet mobile le long du chemin candidat est déterminée à partir de la matrice de covariance courante.

Dans une quatrième étape 84, un polygone représentatif de l'objet mobile en chaque position est déterminé en fonction de données représentatives de dimensions de l'objet mobile et en fonction d'une incertitude de position et d'une incertitude d'orientation déterminées à partir de la matrice de covariance associée à chaque position.

Dans une cinquième étape 85, un profil de vitesse maximale et d'un profil de vitesse minimale le long du chemin candidat sont déterminés en fonction d'une vitesse de l'objet mobile en chaque position le long du chemin candidat obtenue de la troisième information et en fonction d'une incertitude de vitesse déterminée à partir de la matrice de covariance.

Dans une sixième étape 86, une quatrième information représentative d'occupation temporelle d'un espace correspondant au polygone en chaque position est déterminée, la quatrième information étant déterminée en fonction d'un instant minimal et d'un instant maximal déterminés respectivement à partir du profil de vitesse maximale et du profil de vitesse minimale.

Dans une septième étape 87, la trajectoire du véhicule autonome est contrôlée en fonction des quatrièmes information associées à chaque chemin candidat de l'ensemble de chemins candidats.

Selon une variante, les variantes et exemples des opérations décrits en relation avec l'une des figures 1 à 6 s'appliquent aux étapes du procédé de la figure 8.

**Revendications**

1. Procédé de contrôle de trajectoire d'un véhicule autonome (10) circulant dans un environnement (1) comprenant un objet mobile (11), ledit véhicule autonome (10) embarquant un ensemble de capteurs de détection d'objet, ledit procédé comprenant les étapes suivantes :

   - détermination (81) d'un ensemble d'informations dynamiques courantes associées audit objet mobile (11) à partir de données dynamiques dudit objet mobile (11) obtenues dudit ensemble de capteurs de détection d'objet et d'une matrice de covariance courante dudit ensemble d'informations dynamiques à partir desdites données dynamiques et de caractéristiques dudit ensemble de capteurs de détection d'objets, ledit ensemble d'informations dynamiques courantes comprenant une première information représentative d'une position courante dudit objet mobile (11), une deuxième information représentative d'une orientation courante dudit objet mobile (11) et une troisième information représentative d'une vitesse courante dudit objet mobile (11) ;

- détermination (82) d'un ensemble de chemins candidats (111, 112) dudit objet mobile (11) en fonction de ladite première information et de données de cartographie (21) dudit environnement, chaque chemin candidat dudit ensemble (111, 112) étant défini par un ensemble de positions successives dudit objet mobile (11) le long dudit chaque chemin candidat sur un horizon de distance déterminé ;
- pour chaque chemin candidat :

   • détermination (83) d'une matrice de covariance associée à chaque position dudit objet mobile (11) le long dudit chaque chemin candidat à partir de ladite matrice de covariance courante ;
   • détermination (84) d'un polygone représentatif dudit objet mobile (11) en ladite chaque position en fonction de données représentatives de dimensions dudit objet mobile (11) et en fonction d'une incertitude de position et d'une incertitude d'orientation déterminées à partir de ladite matrice de covariance associée à ladite chaque position ;
   • détermination (85) d'un profil de vitesse maximale (61) et d'un profil de vitesse minimale (62) le long dudit chemin candidat en fonction d'une vitesse dudit objet mobile (11) en chaque position le long dudit chaque chemin candidat obtenue de ladite troisième information et en fonction d'une incertitude de vitesse déterminée à partir de ladite matrice de covariance ;
   • détermination (86) d'une quatrième information représentative d'occupation temporelle d'un espace correspondant audit polygone en ladite chaque position, ladite quatrième information étant déterminée en fonction d'un instant minimal et d'un instant maximal déterminés respectivement à partir dudit profil de vitesse maximale (61) et dudit profil de vitesse minimale (62) ;

   - contrôle (87) de trajectoire dudit véhicule autonome en fonction des quatrièmes information associées à chaque chemin candidat dudit ensemble de chemins candidats.

2. Procédé selon la revendication 1, pour lequel ladite matrice de covariance associée à chaque position dudit objet mobile (11) le long dudit chaque chemin candidat correspond à ladite matrice de covariance courante.

3. Procédé selon la revendication 1 ou 2, pour lequel ledit profil de vitesse maximale (61) et ledit profil de vitesse minimale (62) sont déterminés en fonction d'un type dudit objet mobile.

4. Procédé selon la revendication 3, pour lequel :

   - lorsque ledit objet mobile correspond à un piéton (12), une vitesse dudit objet mobile en chaque position dudit objet mobile le long dudit chaque chemin candidat correspond à ladite troisième information ; et
   - lorsque ledit objet mobile correspond à un véhicule (11), une vitesse dudit objet mobile en chaque position dudit objet mobile le long dudit chaque chemin candidat est obtenue en fonction d'un modèle d'accélération déterminé à partir de ladite troisième information et d'une information de limite de vitesse maximale le long dudit chemin candidat.

5. Procédé selon l'une des revendications 1 à 4, pour lequel ladite détermination dudit polygone en ladite chaque position comprend la détermination d'une ellipse d'incertitude (411) selon un niveau de confiance déterminé, ladite ellipse d'incertitude (411) étant déterminée à partir d'une sous-matrice obtenue de ladite matrice de covariance et correspondant à deux états représentatifs de position dudit objet mobile (11), chaque axe de ladite ellipse d'incertitude étant déterminé à partir des vecteurs propres de ladite sous-matrice.

6. Procédé selon l'une des revendications 1 à 5, pour lequel l'instant maximal associé à une première position dudit objet mobile (11) le long d'un chemin candidat dudit ensemble de chemins candidats correspond à l'instant minimal associé à une deuxième position dudit objet mobile le long dudit chemin candidat, lesdites première position et deuxième position se suivant successivement le long dudit chemin candidat.

7. Programme d'ordinateur comportant des instructions pour la mise en œuvre du procédé selon l'une quelconque des revendications précédentes, lorsque ces instructions sont exécutées par un processeur.

8. Support d'enregistrement lisible par un ordinateur sur lequel est enregistré un programme d'ordinateur comprenant des instructions pour l'exécution des étapes du procédé selon l'une des revendications 1 à 6.

9. Dispositif (7) de contrôle de trajectoire d'un véhicule autonome, ledit dispositif (7) comprenant une mémoire (71) associée à au moins un processeur (70) configuré pour la mise en œuvre des étapes du procédé selon l'une quelconque des revendications 1 à 6.

10. Véhicule (10) comprenant le dispositif (7) selon la revendication 9.

**Patentansprüche**

1. Verfahren zum Steuern der Flugbahn eines autonomen Fahrzeugs (10), das in einer Umgebung (1) fährt, die ein bewegliches Objekt (11) umfasst, wobei das autonome Fahrzeug (10) einen Satz von Objekterfassungssensoren an Bord hat, wobei das Verfahren die folgenden Schritte umfasst:

   - Bestimmen (81) eines Satzes aktueller dynamischer Informationen, die dem beweglichen Objekt (11) zugeordnet sind, aus dynamischen Daten des beweglichen Objekts (11), die von dem Satz von Objekterfassungssensoren erhalten werden, und einer aktuellen Kovarianzmatrix des Satzes dynamischer Informationen aus den dynamischen Daten und Merkmalen des Satzes von Objekterfassungssensoren, wobei der Satz von Objekterfassungssensoren bestimmt wird Aktuelle dynamische Informationen, umfassend eine erste Information, die eine aktuelle Position des sich bewegenden Objekts (11) darstellt, eine zweite Information, die eine aktuelle Orientierung des sich bewegenden Objekts (11) darstellt, und eine dritte Information, die eine aktuelle Geschwindigkeit des sich bewegenden Objekts (11) darstellt;
   - Bestimmung (82) eines Satzes von Kandidatenpfaden (111, 112) des sich bewegenden Objekts (11) in Abhängigkeit von der ersten Information und Kartendaten (21) der Umgebung, wobei jeder Kandidatenpfad des Satzes (111, 12) durch einen Satz von aufeinander folgenden Positionen des sich bewegenden Objekts definiert ist (11) entlang des jeweiligen Kandidatenpfades über einen bestimmten Zeithorizont hinweg;
   - für jeden Kandidatenpfad:

      • Bestimmung (83) einer Kovarianzmatrix, die jeder Position des sich bewegenden Objekts (11) entlang des jeweiligen Kandidatenpfades zugeordnet ist;
      • Bestimmung (84) eines Polygons, das das sich bewegende Objekt (11) an der jeweiligen Position darstellt, in Abhängigkeit von Daten, die für die Abmessungen des sich bewegenden Objekts (11) repräsentativ sind, und in Abhängigkeit von einer Positionsunsicherheit und Orientierungsunsicherheit, die aus der der jeweiligen Position zugeordnet ist ;
      • Bestimmen (85) eines maximalen Geschwindigkeitsprofils (61) und eines minimalen Geschwindigkeitsprofils (62) entlang des Kandidatenwegs in Abhängigkeit von einer Geschwindigkeit des sich bewegenden Objekts (11) an jeder Position entlang des Kandidatenwegs, die aus der dritten Information erhalten wird, und in Abhängigkeit von einer aus der Kovarianzmatrix bestimmten Geschwindigkeitsunsicherheit;
      • Bestimmen (86) einer vierten Information, die repräsentativ ist für die zeitliche Belegung eines dem Polygon an jeder Position entsprechenden Raumes, wobei die vierte Information in Abhängigkeit von einem minimalen und maximalen Zeitpunkt bestimmt wird, die jeweils aus der Kovarianzmatrix bestimmt werden Maximalgeschwindigkeitsprofil (61) und Minimalgeschwindigkeitsprofil (62);

   - Bahnsteuerung (87) des autonomen Fahrzeugs in Abhängigkeit von den vierten Informationen, die jedem Kandidatenweg des Kandidatenwegesatzes zugeordnet sind.

2. Verfahren nach Anspruch 1, wobei die Kovarianzmatrix, die jeder Position des beweglichen Objekts (11) entlang jedem Kandidatenpfad zugeordnet ist, der aktuellen Kovarianzmatrix entspricht.

3. Verfahren nach Anspruch 1 oder 2, bei dem das Maximalgeschwindigkeitsprofil (61) und das Minimalgeschwindigkeitsprofil (62) in Abhängigkeit von einem Typ des beweglichen Objekts bestimmt werden.

4. Verfahren nach Anspruch 3, bei dem :

   - wenn das bewegliche Objekt einem Fußgänger (12) entspricht, eine Geschwindigkeit des beweglichen Objekts an jeder Position des beweglichen Objekts entlang jedem Kandidatenweg der dritten Information entspricht; und
   - wenn das bewegliche Objekt einem Fahrzeug (11) entspricht, eine Geschwindigkeit des beweglichen Objekts an jeder Position des beweglichen Objekts entlang jedes Kandidatenwegs gemäß einem Beschleunigungsmuster erhalten wird, das aus der dritten Information und einer Maximalgeschwindigkeitsbegrenzungsinformation entlang des Kandidatenwegs bestimmt wird.

**5.** Verfahren nach einem der Ansprüche 1 bis 4, bei dem das Bestimmen des Polygons an jeder Position das Bestimmen einer Unsicherheitsellipse (411) gemäß einem bestimmten Vertrauensniveau umfasst, wobei die Unsicherheitsellipse (411) aus einer Teilmatrix bestimmt wird, die aus der Kovarianzmatrix erhalten wird und zwei Zuständen entspricht, die die Position des beweglichen Objekts (11) darstellen, wobei jede Achse der Unsicherheitsellipse aus den Eigenvektoren der Teilmatrix bestimmt wird.

**6.** Verfahren nach einem der Ansprüche 1 bis 5, bei dem der einer ersten Position des beweglichen Objekts (11) entlang eines Kandidatenwegs des Satzes von Kandidatenwegen zugeordnete maximale Zeitpunkt dem einer zweiten Position des beweglichen Objekts entlang des Kandidatenwegs zugeordneten minimalen Zeitpunkt entspricht, wobei die erste Position und die zweite Position aufeinander folgend entlang des Kandidatenwegs folgen.

**7.** Computerprogramm mit Anweisungen zur Durchführung des Verfahrens nach einem der vorhergehenden Ansprüche, wenn diese Anweisungen von einem Prozessor ausgeführt werden.

**8.** Computerlesbares Aufzeichnungsmedium, auf dem ein Computerprogramm aufgezeichnet ist, das Befehle zum Ausführen der Schritte des Verfahrens nach einem der Ansprüche 1 bis 6 umfasst.

**9.** Vorrichtung (7) zum Steuern der Bewegungsbahn eines autonomen Fahrzeugs, wobei die Vorrichtung (7) einen Speicher (71) umfasst, der mit mindestens einem Prozessor (70) verbunden ist, der zur Durchführung der Schritte des Verfahrens nach einem der Ansprüche 1 bis 6 konfiguriert ist.

**10.** Fahrzeug (10) mit der Vorrichtung (7) nach Anspruch 9.


**Claims**

**1.** Method for controlling the trajectory of an autonomous vehicle (10) travelling in an environment (1) comprising a mobile object (11), said autonomous vehicle (10) incorporating a set of object detection sensors, said method comprising the following steps:

- determining (81) a set of current dynamic information associated with said mobile object (11) from dynamic data of said mobile object (11) obtained from said set of object detection sensors and a current covariance matrix of said set of dynamic information from said dynamic data and characteristics of said set of object detection sensors, said set of current dynamic information comprising a first piece of information representative of a current position of said mobile object (11), a second piece of information representative of a current orientation of said mobile object (11) and a third piece of information representative of a current speed of said mobile object (11);
- determination (82) of a set of candidate paths (111, 112) of said mobile object (11) as a function of said first piece of information and of mapping data (21) of said environment, each candidate path of said set (111, 112) being defined by a set of successive positions of said mobile object (11) along said each candidate path over a determined distance horizon;
- for each candidate path:

• determination (83) of a covariance matrix associated with each position of said mobile object (11) along said each candidate path from said current covariance matrix;
• determination (84) of a polygon representative of said mobile object (11) in said each position based on data representative of sizes of said mobile object (11) and based on a position uncertainty and an orientation uncertainty determined from said position matrix associated with said covariance matrix determination (85) of a maximum speed profile (61) and a minimum speed profile (62) along said candidate path as a function of a speed of said mobile object (11) in each position along said each candidate path obtained from said third information and as a function of a speed uncertainty determined from said covariance matrix;

- determination (86) of a fourth information representative of the time occupancy of a space corresponding to said polygon in said each position, said fourth information being determined as a function of a minimum instant and of a maximum instant respectively determined starting from said maximum speed profile (61) and said minimum speed profile (62);
- controlling (87) the trajectory of said autonomous vehicle as a function of the fourth information associated with each candidate path of said set of candidate paths.

2. Method according to claim 1, wherein said covariance matrix associated with each position of said mobile object (11) along said each candidate path corresponds to said current covariance matrix.

3. Method according to claim 1 or 2, for which the said maximum speed profile (61) and the said minimum speed profile (62) are determined as a function of a type of the said moving object.

4. Method according to claim 3, for which:

- when said mobile object corresponds to a pedestrian (12), a speed of said mobile object on each position of said mobile object along said each candidate path corresponds to said third information; and
- when said mobile object corresponds to a vehicle (11), a speed of said mobile object on each position of said mobile object along said each candidate path is obtained as a function of an acceleration pattern determined on the basis of said third information and of maximum speed limit information along said candidate path.

5. Method according to one of claims 1 to 4, for which the said determination of the said polygon in the said each position comprises the determination of an uncertainty ellipse (411) according to a determined level of confidence, the said uncertainty ellipse (411) being determined from a sub-matrix obtained from the said covariance matrix and corresponding to two statuses representative of position of the said mobile object (11), each axis of the said uncertainty ellipse being determined from the eigenvectors of the said sub-matrix.

6. Method according to one of claims 1 to 5, for which the maximum instant associated with a first position of the said mobile object (11) along a candidate path of the said set of candidate paths corresponds to the minimum instant associated with a second position of the said mobile object along the said candidate path, the said first position and second position following one another successively along the said candidate path.

7. A computer plan including instructions for implementing the method according to any one of the previous claims, when these instructions are executed by a processor.

8. Computer-readable recording medium on which a computer plan is recorded, comprising instructions for executing the steps of the method according to one of claims 1 to 6.

9. Device (7) for controlling the trajectory of an autonomous vehicle, said device (7) comprising a memory (71) associated with at least one processor (70) configured for implementing the steps of the method according to any one of claims 1 to 6.

10. Vehicle (10) comprising the device (7) according to claim 9.

[Fig. 1]

[Fig. 2]

[Fig. 3]

[Fig. 4]

[Fig. 5]

[Fig. 6]

[Fig. 7]

[Fig. 8]

81

82

83

84

85

86

87

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 11195418 B1

**Littérature non-brevet citée dans la description**

- **R. SCHUBERT** ; **E. RICHTER** ; **G. WANIELIK**. Comparison and evaluation of advanced motion models for vehicle tracking. *2008 11th International Conference on Information Fusion*, 2008, 1-6
- **A. HOUENOU** ; **P. BONNIFAIT** ; **V. CHERFAOUI** ; **W. YAO**. Vehicle trajectory prediction based on motion model and maneuver recognition. *2013 IEEE/RSJ International Conference on Intelligent Robots and Systems*, 2013, 4363-4369
- **C. HEGDE** ; **S. DASH** ; **P. AGARWAL**. Vehicle Trajectory Prediction using GAN. *2020 Fourth International Conference on I-SMAC (IoT in Social, Mobile, Analytics and Cloud) (I-SMAC)*, 2020, 502-507
- **K. MESSAOUD** ; **I. YAHIAOUI** ; **A. VERROUST-BLONDET** ; **F. NASHASHIBI**. Attention Based Vehicle Trajectory Prediction. *IEEE Transactions on Intelligent Vehicles*, March 2021, vol. 6 (1), 175-185